# EUROPEAN PATENT APPLICATION

(11) **EP 4 277 332 A1**
(43) Date of publication of application: **15.11.2023**
(21) Application number: 21916771.5
(22) Date of filing: 07.01.2021
(51) Int. Cl.: H04W 24/02

(54) **SIDELINK CONTROL METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: dompatent von Kreisler Selting Werner - Partnerschaft von Patent- und Rechtsanwälten mbB
(86) International application number: PCT/CN2021/070653
(87) International publication number: WO 2022/147713

(57) **Abstract**

Embodiments of the present invention provide a sidelink (SL) control method and apparatus, a communication device, and a storage medium. The method for controlling an SL comprises: responding, by means of a first UE, to a first timer configured to be started after SL sending, and monitoring an SL channel in a timing duration of starting of the first timer. Therefore, according to the embodiments of the present invention, after the first UE sends an SL, the waking time of the first UE can be prolonged, such that the first UE can monitor the SL channel in the timing duration of the first timer, the probability of losing data and/or signaling sent by an opposite-end UE in the SL can be reduced, and the communication quality of SL communication is improved.

## Description

### TECHNICAL FIELD

The present disclosure relates to a communication technical field, and more particularly to a method for controlling a sidelink, an apparatus for controlling a sidelink, a communication device, and a storage medium.

### BACKGROUND

In order to support a direct communication between a user equipment (UE) and another UE, a sidelink (SL) communication model is introduced. An interface between the UEs may be PC-5. According to the correspondence between a sending UE and a receiving UE, three transmission models are supported on the SL, i.e., unicast, multicast, and broadcast.

In order to save power consumption of the UE, the network may configure discontinuous reception (DRX) for the UE. The UE only monitors a channel during wakeup, and does not need to monitor the channel at other times. In this way, when the UE sends a data packet to a peer UE, and the peer UE returns a data packet to the UE, it is likely that the UE will not be able to receive the data packet returned by the peer UE.

### SUMMARY

Embodiments of the present disclosure provide a method for controlling a sidelink, an apparatus for controlling a sidelink, a communication device and a storage medium.

According to a first aspect of the present disclosure, a method for controlling a sidelink is provided, which is performed by a first user equipment (UE) and includes: in response to being configured with a first timer that starts timing after an SL transmission, monitoring an SL channel within a duration of the timing started by the first timer.

According to a second aspect of the present disclosure, an apparatus for controlling a sidelink (SL) is provided, which is performed by a first user equipment (UE) and includes a monitoring module configured to: in response to being configured with a first timer that starts timing after an SL transmission, monitor an SL channel within a duration of the timing started by the first timer.

According to a third aspect of the present disclosure, a communication device is provided, which includes a processor; and a memory for storing instructions executable by the processor. The processor is configured to implement the method for controlling the SL according to any one of embodiments of the present disclosure when running the executable instructions.

According to a fourth aspect of the present disclosure, a computer storage medium is provided, which has stored therein a computer executable program that, when executed by a processor, causes the method for controlling the SL according to any one of embodiments of the present disclosure to be implemented.

The technical solution provided in embodiments of the present disclosure includes the following beneficial effects.

In embodiments of the present disclosure, in response to the first timer being configured to start timing after the SL transmission, the first UE monitors the SL channel within the duration of the timing started by the first timer. In this way, in embodiments of the present disclosure, the wakeup time of the first UE may extended after the first UE sends a transmission on the SL, for example, after the first UE sends data and/or a signaling via the SL, so that the first UE may monitor the SL channel within the extended wakeup time. Thus, it is beneficial for the first UE to receive the data and/or the signaling returned by a peer UE via the SL channel, thus reducing a probability of losing the data and/or the signaling sent by the peer UE via the SL, increasing a probability that the first UE successfully receives the data and/or the signaling sent by the peer UE, and improving the communication quality of the SL communication.

It is understood that that the general description above and the following detailed description are only illustrative and interpretative, which do not limit embodiments of the present disclosure.

### BRIEF DESCRIPTION OF THE DRAWINGS

FIG. 1 is a schematic diagram illustrating a wireless communication system.
FIG. 2 is a schematic diagram illustrating a method for controlling a sidelink according to an illustrative embodiment.

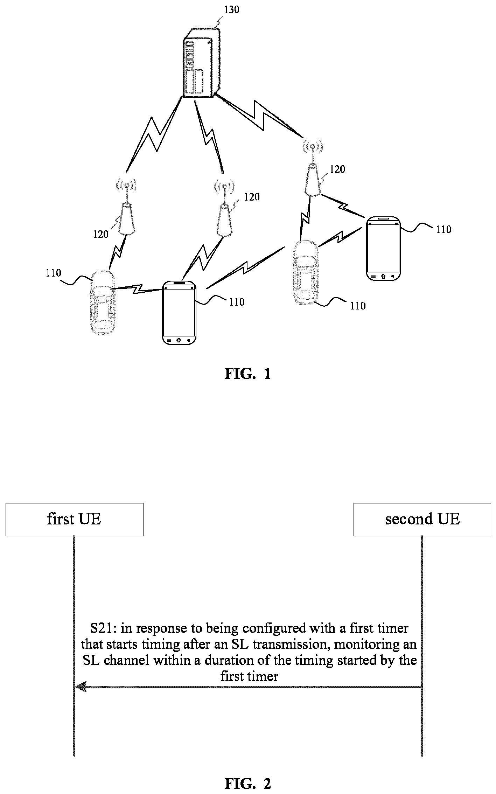

FIG. 2 is a schematic diagram illustrating a method for controlling a sidelink according to an illustrative embodiment.

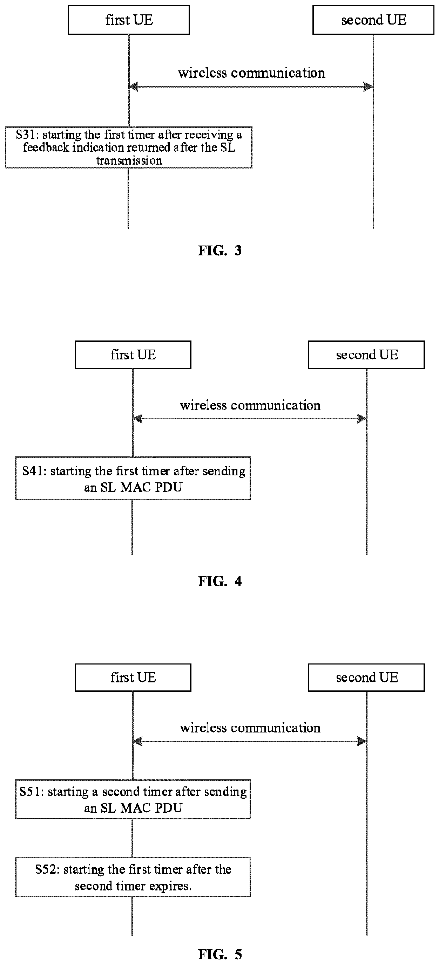

FIG. 3 is a schematic diagram illustrating a method for controlling a sidelink according to an illustrative embodiment.
FIG. 4 is a schematic diagram illustrating a method for controlling a sidelink according to an illustrative embodiment.
FIG. 5 is a schematic diagram illustrating a method for controlling a sidelink according to an illustrative embodiment.

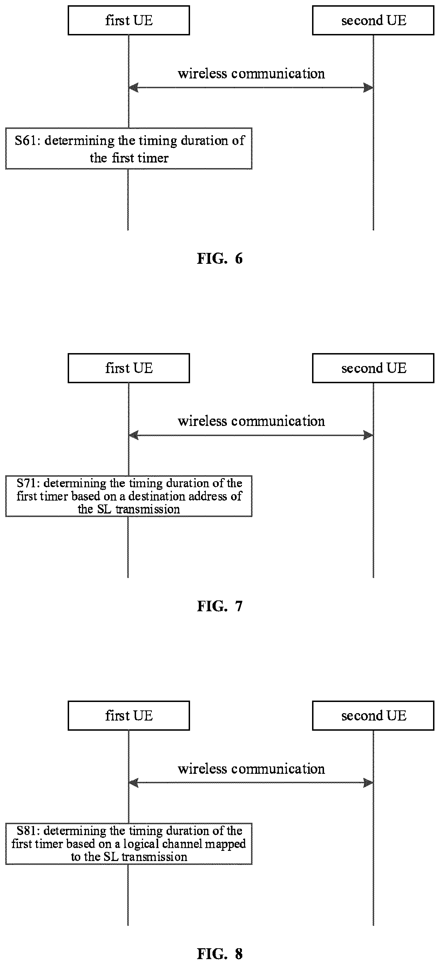

FIG. 6 is a schematic diagram illustrating a method for controlling a sidelink according to an illustrative embodiment.
FIG. 7 is a schematic diagram illustrating a method for controlling a sidelink according to an illustrative embodiment.
FIG. 8 is a schematic diagram illustrating a method for controlling a sidelink according to an illustrative embodiment.

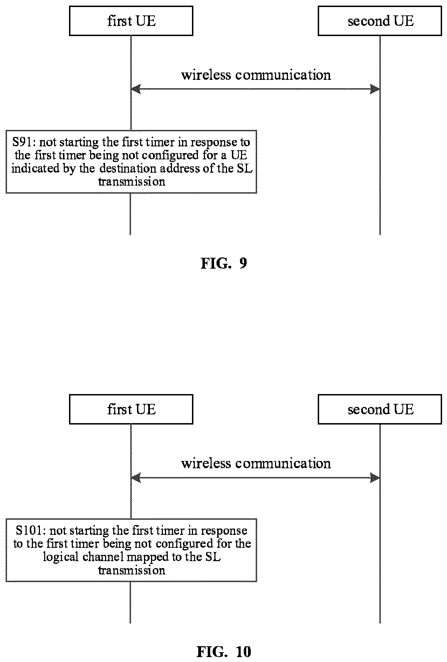

FIG. 9 is a schematic diagram illustrating a method for controlling a sidelink according to an illustrative embodiment.
FIG. 10 is a schematic diagram illustrating a method for controlling a sidelink according to an illustrative embodiment.

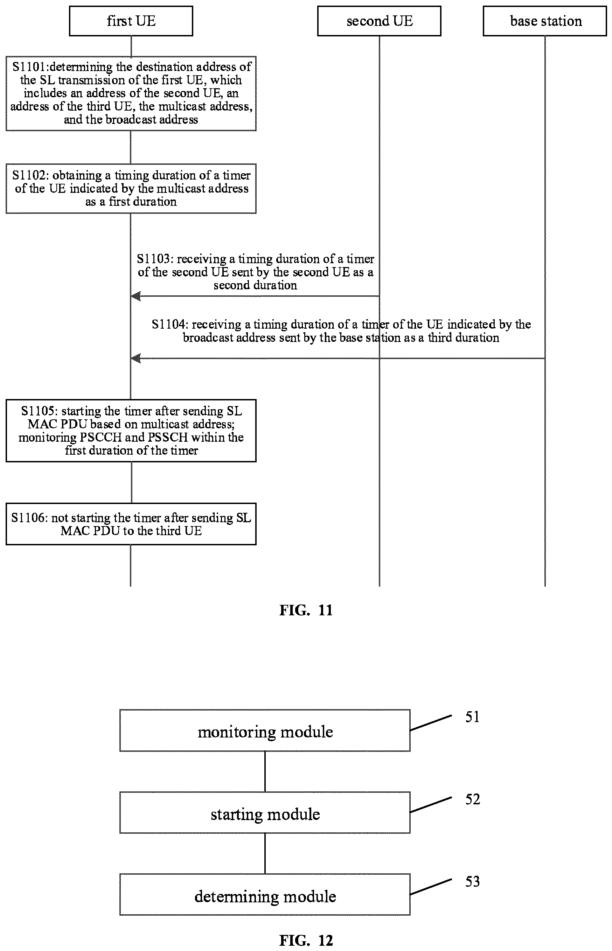

FIG. 11 is a schematic diagram illustrating a method for controlling a sidelink according to an illustrative embodiment.
FIG. 12 is a block diagram illustrating an apparatus for controlling a sidelink according to an illustrative embodiment.

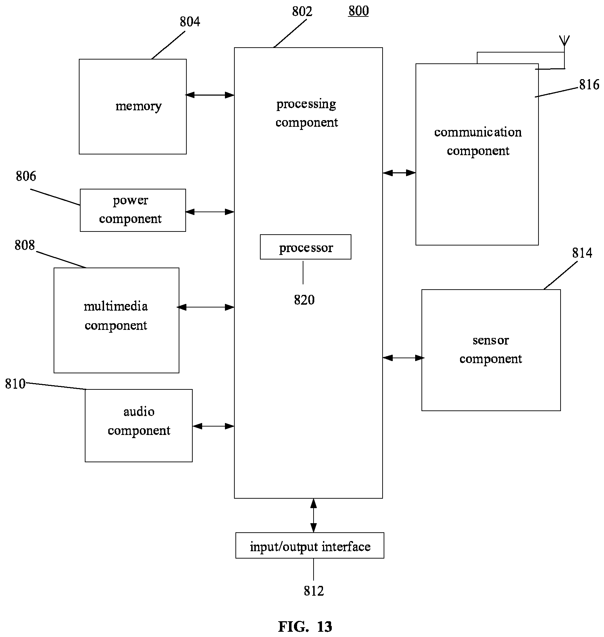

FIG. 13 is a block diagram illustrating a user equipment according to an illustrative embodiment.

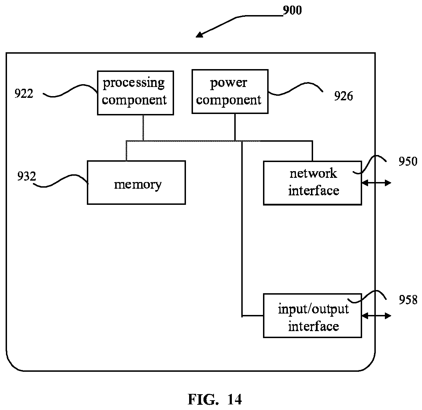

FIG. 14 is a block diagram illustrating a base station according to an illustrative embodiment.

### DETAILED DESCRIPTION

Embodiments of the present disclosure are described in detail below, examples of which are illustrated in the drawings. When the following the accompanying drawings are described, the same or similar elements are denoted by same reference numerals in different drawings unless indicated otherwise. Implementations described in the following embodiments do not represent all implementations that are consistent with embodiments of the present disclosure. On the contrary, they are only examples of devices and methods that are consistent with some aspects of the embodiments of the present disclosure as detailed in the attached claims.

Terms used in embodiments of the present disclosure are for the purpose of describing specific embodiments only, and are not intended to limit embodiments of the present disclosure. As used in the examples of the present disclosure and the appended claims, the singular forms "a" and "the" are also intended to include the plural unless the context clearly dictates otherwise. It should also be understood that the term "and/or" as used herein refers to and includes any and all possible combinations of one or more of the associated listed items.

It is understood that although embodiments of the present disclosure may use the terms first, second, third, etc. to describe various information, the information should not be limited to these terms. These terms are only used to distinguish information of the same type from one another. For example, without departing from the scope of embodiments of the present disclosure, first information may also be called second information, and similarly, second information may also be called first information. Depending on the context, the word "if" as used herein may be interpreted as "upon" or "when" or "in response to determining".

Refer to FIG. 1, which shows a schematic diagram of a wireless communication system according to one embodiment of the present disclosure. As shown in FIG. 1, the wireless communication system is a communication system based on a mobile communication technology, and the wireless communication system may include several user equipments 110 and several base stations 120.

The user equipment 110 may be a device that provides voice and/or data connectivity to the user. The user equipment 110 may communicate with one or more core networks via a radio access network (RAN), and the user equipment 110 may be user equipment of an Internet of Things (IoT), such as a sensor device, a mobile phone (or called a cellular phone) and computers with IoT user equipment. For example, the user equipment 110 may be fixed, portable, pocket, hand-held, computer built-in or vehicle-mounted devices. For example, the user equipment 110 may be a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 may also be equipment of an unmanned aerial vehicle. Alternatively, the user equipment 110 may also be a vehicle-mounted device, for example, a trip computer with a wireless communication function, or a wireless user device connected externally to the trip computer. Alternatively, the user equipment 110 may also be a roadside device, for example, may be a street lamp, a signal lamp, or other roadside devices with a wireless communication function.

The base station 120 may be a network side device in a wireless communication system. The wireless communication system may be a fourth generation mobile communication technology (the 4^{th} generation mobile communication, 4G) system, also known as a long term evolution (LTE) system. Alternatively, the wireless communication system may also be a 5G system, also known as a new radio system or a 5G NR system. Alternatively, the wireless communication system may also be a next-generation system of the 5G system. The access network in the 5G system may be called a new generation-radio access network (NG-RAN).

The base station 120 may be an evolved base station (eNB) adopted in a 4G system. Alternatively, the base station 120 may also be a base station (gNB) adopting a centralized distributed architecture in the 5G system. When the base station 120 adopts a centralized distributed architecture, it generally includes a central unit (CU) and at least two distributed units (DU). The central unit is provided with a packet data convergence protocol (PDCP) layer, a radio link control (RLC) layer, a media access control (MAC) layer protocol stack. The central unit is provided with a physical (PHY) layer protocol stack, and the specific implementation manner of the base station 120 is not limited in embodiments of the present disclosure.

A wireless connection may be established between the base station 120 and the user equipment 110 through a wireless air interface. In different embodiments, the wireless air interface is a wireless air interface based on the fourth-generation mobile communication network technology (4G) standard. Alternatively, the wireless air interface is a wireless air interface based on the fifth-generation mobile communication network technology (5G) standard, such as a new radio. Alternatively, the wireless air interface may also be a wireless air interface based on a technical standard of a next-generation mobile communication network based on 5G.

In some embodiments, an E2E (End to End) connection may also be established between user equipments 110, such as, V2V (vehicle to vehicle) communication, V2I (vehicle to Infrastructure) communication and V2P (vehicle to pedestrian) communication in V2X (vehicle to everything) communication.

Here, the above-mentioned user equipment may be regarded as the terminal equipment in the following embodiments.

In some embodiments, the above-mentioned wireless communication system may further include a network management device 130.

Several base stations 120 are connected to the network management device 130 respectively. The network management device 130 may be a core network device in a wireless communication system, for example, the network management device 130 may be a mobility management entity (MME). Alternatively, the network management device may also be other core network devices, such as a serving gateway (SGW), a public data network gateway (PGW), a policy and charging rule function (PCRF) or a home subscriber server (HSS), etc. The implementation form of the network management device 130 is not limited in embodiments of the present disclosure.

In order to better understand the technical solution described in any embodiment of the present disclosure, first, an SL communication is described.

On an Uu interface, the network may configure DRX for the UE, and the DRX configuration may include at least one of the following: an inactivity timer, a wakeup timer, a duration, a start offset, an uplink hybrid automatic repeat request (HARQ) round-trip time (RTT) timer, a downlink HARQ RTT timer, an uplink retransmission timer and a downlink retransmission timer. The uplink HARQ RTT timer and the downlink HARQ RTT timer represent the number of symbols, and the uplink retransmission timer and the downlink retransmission timer represent the number of time slots. The duration, the start offset and the wakeup timer may be used together to determine a cycle start time point of the wakeup timer.

In response to receiving downlink control information (DCI) carrying its own cell-radio network temporary identifier (C-RNTI) on a physical downlink control channel (PDCCH), the UE starts an inactivity timer. In response to receiving a medium access control (MAC) protocol data unit (PDU), the UE sends a feedback indication to a base station and starts the downlink HARQ RTT timer after sending the feedback indication. In response to the downlink HARQ RTT timer expiring, the UE starts the downlink retransmission timer. In response to a transmission on a physical uplink shared control channel (PUSCH), the UE starts the uplink HARQ RTT timer. In response to the uplink HARQ RTT timer expiring, the UE starts the uplink retransmission timer.

The UE monitors the PDCCH channel only during the wakeup duration, and the UE does not need to monitor the PDCCH channel at other times, thereby saving consumption. The wakeup duration includes the running time of the wakeup timer, the inactivity timer, the uplink retransmission timer, and/or the downlink retransmission timer. In the existing DXR mechanism, after the UE sends a transmission, an activation time of the UE (that is, the wakeup time of the UE) will not be extended. However, in the SL communication, the service has bidirectional characteristics. For example, after UE1 sends a data packet to UE2, it is likely that UE2 returns a data packet to UE1 as a reply. In this way, if the activation time of UE1 cannot be extended, it is very likely that UE1 will not be able to receive the data packet replied by UE2.

As shown in FIG. 2, embodiments of the present disclosure provide a method for controlling an SL, which is performed by a first UE and includes:

step S21, in response to being configured with a first timer that starts timing after an SL transmission, monitoring an SL channel within a duration of the timing started by the first timer.

In some embodiments, the first UE may be various mobile terminals or fixed terminals. For example, the first UE may be, but is not limited to, a mobile phone, a computer, a server, a wearable device, a game control platform, a multimedia device or the like.

In some embodiments, the first UE may be a UE that establishes an SL communication with any other UE. For example, the first UE may be a UE that establishes an SL communication with a second UE. The second UE here may also be various mobile terminals or fixed terminals. For example, the second UE may be, but is not limited to, a mobile phone, a computer, a server, a wearable device, a game control platform, a multimedia device or the like.

In some embodiments, in step S21, the response to the first timer being configured to start after the SL transmission may be: response to the first timer being configured to start after sending data and/or a signaling on the SL. Sending the data and/or the signaling on the SL here may also be sending an SL transmission on the SL, or sending SL data and/or an SL signaling on the SL, or the like.

In other embodiments, in step S21, the response to the first timer being configured to start after the SL transmission may be: response to the first timer being configured to start after sending an MAC PDU on an SL. In embodiments of the present disclosure, an SL MAC PDU may be sent by the first UE on the SL. Here, the SL data and/or the SL signaling may be carried in the SL MAC PDU and sent. For example, the data to be sent by the first UE is combined into the MAC PDU, and the MAC PDU is sent to the peer UE based on the SL.

In some embodiments, monitoring the SL channel includes, but is not limited to: monitoring a physical sidelink control channel (PSCCH) and/or monitoring a physical sidelink shared channel (PSSCH). In embodiments of the present disclosure, after the first UE sends data and/or a signaling on the SL, if the first UE is configured with a first timer, the first UE may monitor the SL transmission on the PSCCH and/or PSSCH within the timing duration of the first timer. The SL transmission here includes SL data and/or the SL signaling and the like. In some embodiments, the SL transmission also includes the SL MAC PDU.

In one embodiment, the above-mentioned step S21 may be, in response to being configured with the first timer that starts timing after an SL transmission on the PSCCH, monitoring an SL channel within a duration of the timing started by the first timer.

In other embodiments, the above-mentioned step S21 may be, in response to being configured with a first timer that starts timing after an SL transmission on the PSSCH, monitoring an SL channel within a duration of the timing started by the first timer.

A method for controlling an SL provided in embodiments of the present disclosure may include starting a first timer in response to the first timer being configured to start after an SL transmission, and monitoring an SL channel within a timing duration of the first timer. In embodiments of the present disclosure, if the first timer is configured for the first UE, the first timer may be started, so that the first UE may monitor the SL channel within the duration of the timing started by the first timer.

A method for controlling an SL provided in embodiments of the present disclosure may include starting a first timer in response to an SL transmission. For example, the first UE starts the first timer in response to the first timer being configured to start after an SL transmission and sending the SL transmission on the SL. In this way, in embodiments of the present disclosure, if the first UE is configured with the first timer, the first timer may be started after the SL transmission, so that the first UE may monitor the SL channel within the duration of the timing started by the first timer.

In embodiments of the present disclosure, the first UE may send the SL transmission to the peer UE on the SL through one of unicast, multicast and broadcast. Here, the peer UE may be any one UE or multiple UEs.

In embodiments of the present disclosure, after the first UE sends a transmission on the SL, for example, after the first UE sends data and/or a signaling via the SL, the wakeup time of the first UE may be extended, so that the first UE may monitor the SL channel within the extended wakeup time. Thus, it is beneficial for the first UE to receive the data and/or the signaling returned by the peer UE via the SL channel, thus reducing a probability of losing the data and/or the signaling sent by the peer UE via the SL, improving a probability that the first UE successfully receives the data and/or the signaling sent by the peer UE, and improving the communication quality of the SL communication.

As shown in FIG. 3, embodiments of the present disclosure provide a method for controlling an SL, which is performed by a first UE and includes:
step S31: starting the first timer in response to receiving a feedback indication returned after the SL transmission.

The feedback indication here may be any SL transmission returned based on the SL transmission sent by the first UE on the SL, which is not limited here. The SL transmission here may include SL data and/or an SL signaling.

In some embodiments, the above-mentioned step S31 may be starting the first timer in response to the first timer being configured to start after an SL transmission and receiving the feedback indication returned after the SL transmission.

In embodiments of the present disclosure, the timer may be started after the first UE receives the feedback indication returned based on the transmission of the first UE. In this way, the first UE starts the timer after the transmission only when the peer UE is likely to send an SL transmission to the first UE, so that the power consumption of the first UE may be further saved on the premise that the first UE receives the SL transmission sent by the peer UE.

In other embodiments, a method for controlling an SL may also include not starting the first timer in response to not receiving a feedback indication returned after the SL transmission within a predetermined time range. In this way, in embodiments of the present disclosure, if the first UE does not receive the feedback indication from the peer UE, it may be considered that the peer UE will not send the SL transmission to the first UE, and the first UE may not start the first timer, so that the first UE will not prolong the wakeup time, that is, the power consumption of the first UE may be further saved.

In other embodiments, a method for controlling an SL may also include resending an SL transmission via an SL in response to not receiving a feedback indication returned after the SL transmission within a predetermined time range. The SL transmission here includes, but is not limited to, at least one of the following: SL data, an SL signaling, and an SL MAC PDU. In this way, in embodiments of the present disclosure, a success rate of sending the SL transmission by the first UE may be improved, so that the communication quality of the SL communication may be improved.

It is noted that those skilled in the art may understand that the method provided in embodiments of the present disclosure may be executed independently, or together with some methods in embodiments of the present disclosure or some methods in the related art.

As shown in FIG. 4, embodiments of the present disclosure provide a method for controlling an SL, which is performed by the first UE and includes:
step S41: starting a first timer after sending an SL MAC PDU.

For example, after sending the SL MAC PDU on the SL, the first UE starts a first timer. The first UE is configured with the first timer.

The MAC PDU here may include a destination address. The destination address here may be used to indicate an address of the UE to which the SL transmission is sent.

In this way, in embodiments of the present disclosure, the first timer may be started only after the first UE sends the SL MAC PDU, which may increase a probability that the first UE successfully receives the SL transmission sent by the peer UE, and improve the communication quality of the SL communication. Moreover, if the MAC PDU further includes the destination address, it may further be used to determine whether the peer UE to which the first UE sends the SL transmission via the SL is a UE that correctly receives the SL transmission.

It is noted that those skilled in the art may understand that the method provided in embodiments of the present disclosure may be executed independently, or together with some methods in embodiments of the present disclosure or some methods in the related art.

As shown in FIG. 5, embodiments of the present disclosure provide a method for controlling an SL, which is performed by a first UE and includes:
step S51: starting a second timer after sending an SL MAC PDU;
step S52: starting the first timer after the second timer expires.

In one embodiment, the first UE may monitor the SL channel within the timing duration of the first timer; and the first UE does not monitor the SL channel within the timing duration of the second timer. The second timer here may only be used for timing. For example, the second timer is used for timing the start of the first timer, and if the second timer expires and it is determined that a starting moment of the first timer is reached, the first timer is started.

In another embodiment, the second timer may be a receiving timer indicating a feedback, and the feedback indication may be received within the second timer.

Certainly, in other embodiments, the second timer may also be a timer indicating any predetermined time. For example, the predetermined time may be less than or equal to a time for the peer UE to parse the SL transmission sent by the first UE, or less than or equal to a time when the peer UE prepares to send the SL transmission after receiving the SL transmission from the first UE, and so on.

The method for controlling the SL provided in embodiments of the present disclosure may include starting a first timer in response to reaching a predetermined time after sending an SL MAC PDU. The predetermined time here may be a timing duration of the second timer in the above-mentioned embodiments.

For example, in embodiments of the present disclosure, the first UE does not start the first timer immediately after the SL transmission, for example, after sending the SL MAC PDU; instead, the first UE starts the second timer, and then starts the first timer after the second timer expires. In this way, the first UE may reserve a waiting time, for example, may wait for the peer UE to parse and receive the SL MAC PDU sent by the first UE, so as to monitor the SL channel after the reserved waiting time.

In embodiments of the present disclosure, the first UE may start the first timer only after the predetermined time after sending the SL MAC PDU is reached. In this way, the first UE may send the corresponding SL transmission after waiting for the peer UE to perform corresponding operations after receiving the SL MAC PDU, so that the first UE will not wake up a long time in advance when the peer UE has not sent the corresponding SL transmission. In this way, in embodiments of the present disclosure, the wakeup time of the first UE may be shortened and it is ensured that the first UE may monitor the SL transmission on the SL channel, which may further save the power consumption of the first UE, and improve a communication quality of the SL communication of the first UE.

It is noted that those skilled in the art may understand that the method provided in embodiments of the present disclosure may be executed independently, or together with some methods in embodiments of the present disclosure or some methods in the related art.

As shown in FIG. 6, embodiments of the present disclosure provide a method for controlling an SL, which is performed by a first UE and includes:
step S61: determining a timing duration of the first timer.

Here, the timing duration of the first timer may be bound with a destination address, that is, the destination address has a corresponding relationship with the timing duration of the first timer. Here, the timing duration of the first timer may also be bound to a logical channel, that is, the logical channel has a corresponding relationship with the timing duration of the first timer.

The logical channel here is a virtual channel that transfers different types of information on a physical channel. For example, one physical channel may correspond to a plurality of logical channels, and different logical channels map different types of data and/or signalings to the physical channel.

In some embodiments, the destination address may include, but is not limited to, at least one of the following: a destination address of the second UE, a multicast address, and a broadcast address. Here, the second UE is a UE that establishes an SL unicast connection with the first UE.

In embodiments of the present disclosure, the timing duration of the first timer may be determined, so that the first UE only monitors the SL channel within an appropriate wakeup time, thereby saving power consumption of the first UE.

It is noted that those skilled in the art may understand that the method provided in embodiments of the present disclosure may be executed independently, or together with some methods in embodiments of the present disclosure or some methods in the related art.

As shown in FIG. 7, embodiments of the present disclosure provide a method for controlling an SL, which is performed by a first UE and includes:
step S71: determining a timing duration of the first timer based on a destination address of an SL transmission.

Here, the destination address may include, but is not limited to, at least one of the following: an address of a second UE, a multicast address, and a broadcast address.

The method for controlling the SL provided in embodiments of the present disclosure may include pre-configuring the destination address of the SL transmission and the timing duration of the first timer corresponding to the destination address.

For example, pre-configuring by the first UE the destination address of the SL transmission and the timing duration of the first timer corresponding to the destination address may be: configuring by the first UE the destination address of the SL transmission and the timing duration of the first timer corresponding to the destination address according to stored historical information, or configuring by the first UE the destination address of the SL transmission and the timing duration of the first timer corresponding to the destination address according to relevant information in a communication protocol. Here, the historical information may at least include a corresponding relationship between the SL transmission sent on the SL and the destination address, and/or a corresponding relationship between the destination address and the timing duration of the first timer.

The method for controlling the SL provided in embodiments of the present disclosure may include obtaining the destination address of the SL transmission and the timing duration of the first timer corresponding to the destination address which are configured by a base station.

The base station here may be various types of base stations. For example, the base station may be, but is not limited to, a base station of a third generation mobile communication (3G) network, a base station of a fourth generation mobile communication (4G) network, a base station of a fifth generation mobile communication (5G) network, or other evolved base stations. The base station here may also be a terrestrial network base station or a non-terrestrial network base station.

The method for controlling the SL provided in embodiments of the present disclosure may include configuring the destination address of the SL transmission and the timing duration of the first timer corresponding to the destination address via a high layer of the first UE.

For example, the high layer of the first UE may be an application layer of the first UE.

Certainly, in other embodiments, pre-configuring or configuring the destination address of the SL transmission and the timing duration of the first timer corresponding to the destination address may not be performed by the high layer of the first UE.

The method for controlling the SL provided in embodiments of the present disclosure may include receiving a destination address and the timing duration of the first timer which are sent by a second UE in response to the first UE establishing a unicast connection with the second UE. The destination address comprises an address of the second UE.

For example, receiving by the first UE the destination address and the timing duration of the first timer which are sent by the second UE may be: receiving by the first UE the destination address and the timing duration of the first timer which are sent by the second UE via an SL radio resource control (RRC) message, or receiving by the first UE the destination address and the timing duration of the first timer which are sent by the second UE via an SL MAC control element (CE).

In embodiments of the present disclosure, the first UE may determine the timing duration of the first timer based on the destination address of the SL transmission. In this way, in embodiments of the present disclosure, the configuration of different timing durations of the first timer may be realized for the destination addresses of different SL transmissions, so that the first UE has an appropriate wakeup time for different destination addresses. On the one hand, the power consumption of the first UE may be saved, and on the other hand, the first UE may adapt to the extension of the wakeup time in more application scenarios based on the SL transmission.

Moreover, embodiments of the present disclosure also provide a variety of ways to determine the destination address and the timing duration of the first timer corresponding to the destination address, which realizes the diversification of ways to determine the timing duration of the first timer, and adapts to more application scenarios in which the wakeup time of the first UE is prolonged.

It is noted that those skilled in the art may understand that the method provided in embodiments of the present disclosure may be executed independently, or together with some methods in embodiments of the present disclosure or some methods in the related art.

As shown in FIG. 8, embodiments of the present disclosure provide a method for controlling an SL, which is performed by a first UE and includes:
step S81: determining the timing duration of the first timer based on a logical channel mapped to the SL transmission.

The method for controlling the SL provided in embodiments of the present disclosure may include:
selecting, from the first timers in a plurality of logical channels, a longest timing duration as the timing duration of the first timer started after the SL transmission in response to the logical channel mapped to the SL transmission being the plurality of logical channels configured with the first timers.

Here, the SL transmission sent on the SL, such as the SL MAC PDU, may be mapped to a plurality of logical channels; each logical channel is configured with one first timer. In embodiments of the present disclosure, if the SL transmission sent on the SL is mapped to a plurality of logical channels, the longest timing duration may be selected from the first timers configured in the plurality of the logical channels as the timing duration of the first timer started by the first UE.

The method for controlling the SL provided in embodiments of the present disclosure may include:
pre-configuring the logical channel mapped to the SL transmission and the timing duration of the first timer corresponding to the logical channel.

For example, pre-configuring by the first UE the logical channel mapped to the SL transmission and the timing duration of the first timer corresponding to the logical channel may be: configuring by the first UE the logical channel mapped to the SL transmission and the timing duration of the first timer corresponding to the logical channel according to stored historical information, or configuring by the first UE the logical channel mapped to the SL transmission and the timing duration of the first timer corresponding to the logical channel according to relevant information in a communication protocol. The historical information here may at least include a mapping relationship between the SL transmission sent on the SL and the logical channel, and/or a corresponding relationship between the logical channel and the timing duration of the first timer.

In other embodiments, preconfiguring or configuring the logical channel for the SL transmission and the timing duration of the first timer corresponding to the logical channel may not be performed by the high layer of the first UE.

The method for controlling the SL provided in embodiments of the present disclosure may include:
obtaining the logical channel mapped to the SL transmission and the timing duration of the first timer corresponding to the logical channel which are configured by a base station.

The base station here may be various types of base stations. For example, the base station may be, but is not limited to, a base station of a 3G network, a base station of a 4G network, a base station of a 5G network or other evolved base stations. The base station here may also be a terrestrial network base station or a non-terrestrial network base station.

The method for controlling the SL provided in embodiments of the present disclosure may include:
configuring the logical channel mapped to the SL transmission and the timing duration of the first timer corresponding to the logical channel via a high layer of the first UE.

For example, the high layer of the first UE may be an application layer of the first UE.

The method for controlling the SL provided in embodiments of the present disclosure may include:
receiving the logical channel and the timing duration of the first timer corresponding to the logical channel which are sent by a second UE in response to the first UE establishing a unicast connection with the second UE.

For example, receiving by the first UE the logical channel and the timing duration of the first timer corresponding to the logical channel which are sent by the second UE may be: receiving by the first UE the logical channel and the timing duration of the first timer corresponding to the logical channel which are sent by the second UE via the SL RRC message, or receiving by the first UE the logical channel and the timing duration of the first timer corresponding to the logical channel which are sent by the second UE via the SL MAC CE.

In other embodiments, the first UE knows the logical channel mapped by the first UE to the SL transmission, and the first UE may only receive the timing duration of the first timer from the second UE. For example, in response to the establishment of the unicast connection between the first UE and the second UE, the timing duration of the first timer sent by the second UE via the SL RRC message is received, or the timing duration of the first timer sent by the second UE via the SL MAC CE is received.

In embodiments of the present disclosure, the timing duration of the first timer may be determined through the logical channel mapped by the first UE to the SL transmission. In this way, in embodiments of the present disclosure, configurations of different timing durations of the first timer may be realized for different logical channels mapped to the SL transmission, so that the first UE have an appropriate wakeup time for different logical channels mapped to the SL transmission. On the one hand, the power consumption of the first UE may be saved, and on the other hand, the first UE may adapt to the extension of the wakeup time in more application scenarios based on the SL transmission.

Moreover, embodiments of the present disclosure also provide a variety of ways to determine the logical channel and the timing duration of the first timer corresponding to the logical channel, which realizes the diversification of ways to determine the timing duration of the first timer, and adapts to more application scenarios in which the wakeup time of the first UE is prolonged.

It is noted that those skilled in the art may understand that the method provided in embodiments of the present disclosure may be executed independently, or together with some methods in embodiments of the present disclosure or some methods in the related art.

As shown in FIG. 9, embodiments of the present disclosure provide a method for controlling an SL, which is performed by a first UE and includes:
step S91: not starting the first timer in response to the first timer being not configured for a UE indicated by the destination address of the SL transmission.

For example, in response to the first timer being not configured for the UE indicated by the destination address of the SL transmission of the SL MAC PDU, the first UE does not start the first timer after the first UE sends the SL MAC PDU.

In this way, in embodiments of the present disclosure, if the UE indicated by the destination address of the SL transmission is not configured with the first timer, the UE indicated by the destination address will not be activated for the SL transmission, and thus the first UE does not need to extend the wakeup time to monitor the SL channel, thus further saving the power consumption of the first UE.

It is noted that those skilled in the art may understand that the method provided in embodiments of the present disclosure may be executed independently, or together with some methods in embodiments of the present disclosure or some methods in the related art.

As shown in FIG. 10, embodiments of the present disclosure provide a method for controlling an SL, which is performed by a first UE and includes:
step S101: not starting the first timer in response to the logical channel mapped to the SL transmission being not configured with the first timer.

For example, the first UE does not start the first timer after the first UE sends the SL MAC PDU in response to the first timer being not configured for the logical channel mapped to the SL transmission of the SL MAC PDU.

There may be a plurality of logical channels in the UE. For example, the first UE has a plurality of physical channels, and one physical channel corresponds to a plurality of logical channels. At least one of the plurality of logical channels may be configured with the first timer or may not be configured with the first timer. If the first UE does not configure the first timer on the logical channel mapped to the SL transmission, the first timer may not be started.

In this way, in embodiments of the present disclosure, if the logical channel mapped to the SL transmission is not configured with the first timer, the first UE will not receive the SL transmission based on the logical channel, and the first UE does not need to extend the wakeup time to monitor the SL channel, so as to further save the power consumption of the first UE.

Certainly, in other embodiments, the method for controlling the SL is performed by the first UE, and includes not starting the first timer in response to the first UE being not configured with the first timer after the SL transmission. In this way, in embodiments of the present disclosure, since the first UE is not configured with the first timer, it is impossible to start the first timer.

It is noted that those skilled in the art may understand that the method provided in embodiments of the present disclosure may be executed independently, or together with some methods in embodiments of the present disclosure or some methods in the related art.

An example is provided below in combination with any of the above-mentioned embodiments.

As shown in FIG. 11, a method for controlling an SL is provided, which is performed by a first UE and includes the following steps.

In step S1101, a destination address of the SL transmission of the first UE is determined, which includes an address of a second UE, an address of a third UE, a multicast address and a broadcast address.

In step S1102, a timing duration of a timer of a UE indicated by the multicast address is obtained as a first duration.

In one embodiment, the first UE obtains as the first duration the timing duration of the timer of the UE indicated by the multicast address based on an application layer. For example, the first duration is 10 milliseconds.

In step S1 103, a timing duration of a timer of the second UE sent by the second UE is received as a second duration.

In one embodiment, the first UE receives the timing duration of the timer of the second UE sent by the second UE via an SL RRC message. The timing duration of the timer of the second UE is the second duration. For example, the second duration is 20 milliseconds.

In step S1104, a timing duration of a timer of a UE indicated by the broadcast address sent by the base station is received as a third duration.

In one embodiment, the first UE receives the timing duration of the timer of a UE indicated by the broadcast address sent by the base station. The timing duration of the timer for the broadcast address is the third duration. For example, the third duration is 30 milliseconds.

In step S 1105, the timer is started after sending the SL MAC PDU based on the multicast address, and a PSCCH and a PSSCH are monitored within the first duration of the timer.

In one embodiment, after the first UE sends the SL MAC PDU based on the multicast address, the timer of the first UE is started, and the SL transmissions on the PSCCH and the PSSCH are monitored within the first duration of the timer. For example, the SL transmissions on the PSCCH and the PSSCH are monitored within 10 milliseconds after sending the SL MAC PDU.

In step S1106, the timer is not started after sending the SL MAC PDU to the third UE.

Here, since the first UE has not obtained the timing duration of the timer of the third UE, it may be considered that the third UE is not configured with a timer, and the first UE does not start its own timer after sending the SL MAC PDU.

In embodiments of the present disclosure, after the first UE sends the SL transmission (such as an SL MAC PDU) to the UE indicated by the destination address, for the UE indicated by the destination address which is configured with a timer, a timer of the first UE is started. In this way, the wakeup time of the first UE may be extended, so that the first UE may monitor the SL transmission sent by the UE indicated by the destination address on the SL channel (such as the PSCCH and/or the PSSCH). In this way, the SL transmission sent by the UE indicated by the destination address that is received by the first UE may be improved while saving the power consumption of the first UE.

Alternatively, after the first UE sends the SL transmission to the UE indicated by the destination address, the timer of the first UE is not started for the UE indicated by the destination address which is not configured with a timer. In this way, for an application scenario where the UE indicated by the destination address does not have an SL transmission to the first UE, the first UE will not prolong the wakeup time, thereby further saving power consumption of the first UE.

It is noted that those skilled in the art may understand that the method provided in embodiments of the present disclosure may be executed independently, or together with some methods in embodiments of the present disclosure or some methods in the related art.

As shown in FIG. 12, embodiments of the present disclosure provide an apparatus for controlling an SL, which is applied to a first UE and includes:
a monitoring module 51 configured to, in response to being configured with a first timer that starts timing after an SL transmission, monitor an SL channel within a duration of the timing started by the first timer.

The apparatus for controlling the SL provided in embodiments of the present disclosure may include a starting module 52 configured to start the first timer in response to the SL transmission. For example, the starting module 52 is configured to start the first timer in response to the first timer being configured to start after the SL transmission and the SL transmission being sent on the SL.

The apparatus for controlling the SL provided in embodiments of the present disclosure may include the starting module 52 configured to start the first timer after receiving a feedback indication returned after the SL transmission.

The apparatus for controlling the SL provided in embodiments of the present disclosure may include the starting module 52 configured to start the first timer after sending an SL MAC PDU.

The apparatus for controlling the SL provided in embodiments of the present disclosure may include the starting module 52 configured to start a second timer after sending an SL MAC PDU, and start the first timer after the second timer expires.

The apparatus for controlling the SL provided in embodiments of the present disclosure may include the monitoring module 51 configured to monitor a physical sidelink control channel (PSCCH), and/or monitor a physical sidelink shared channel (PSSCH).

The apparatus for controlling the SL provided in embodiments of the present disclosure may include a determining module 53 configured to determine the timing duration of the first timer.

The apparatus for controlling the SL provided in embodiments of the present disclosure may include the determining module 53 configured to determine the timing duration of the first timer based on a destination address of the SL transmission.

The apparatus for controlling the SL provided in embodiments of the present disclosure may include the determining module 53 configured to:
pre-configure the destination address of the SL transmission and the timing duration of the first timer corresponding to the destination address;
obtain the destination address of the SL transmission and the timing duration of the first timer corresponding to the destination address which are configured by a base station;
configure the destination address of the SL transmission and the timing duration of the first timer corresponding to the destination address;
receive a destination address and the timing duration of the first timer which are sent by a second UE in response to the first UE establishing a unicast connection with the second UE, wherein the destination address comprises an address of the second UE.

The determining module 53 here may be at a high layer of the first UE, or not at a high layer of the first UE. If the determining module 53 is at the high layer of the first UE, the apparatus for controlling the SL may include the determination module 53 configured to configure the destination address sent on the SL and the timing duration corresponding to the destination address via the high layer of the first UE.

The apparatus for controlling the SL provided in embodiments of the present disclosure may include the determining module 53 configured to determine a timing duration of a first timer based on a logical channel mapped to the SL transmission.

The apparatus for controlling the SL provided in embodiments of the present disclosure may include the determining module 53 configured to select, from the first timers in a plurality of logical channels, a longest timing duration as the timing duration of the first timer started after the SL transmission in response to the logical channel mapped to the SL transmission being the plurality of logical channels configured with the first timers..

The apparatus for controlling the SL provided in embodiments of the present disclosure may include the determining module 53 configured to:
pre-configure the logical channel mapped to the SL transmission and the timing duration of the first timer corresponding to the logical channel;
obtain the logical channel mapped to the SL transmission and the timing duration of the first timer corresponding to the logical channel which are configured by a base station;
configure the logical channel mapped to the SL transmission and the timing duration of the first timer corresponding to the logical channel;
receive the logical channel and the timing duration of the first timer corresponding to the logical channel which are sent by a second UE in response to the first UE establishing a unicast connection with the second UE.

The determining module 53 here may be at a high layer of the first UE, or not at a high layer of the first UE. If the determining module 53 is at the high layer of the first UE, the apparatus for controlling the SL may include the determining module 53 configured to configure the logical channel mapped to the SL transmission and the timing duration of the first timer corresponding to the logical channel via the high layer of the first UE.

The apparatus for controlling the SL provided in embodiments of the present disclosure may include the determining module 53 configured to receive the timing duration of the first timer sent by the second UE via an SL radio resource control (RRC) message; or
the determining module configured to receive the timing duration of the first timer sent by the second UE via an SL MAC control element (CE).

The apparatus for controlling the SL provided in embodiments of the present disclosure may include the starting module 52 configured to not start the first timer in response to the first timer being not configured for a UE indicated by the destination address of the SL transmission.

The apparatus for controlling the SL provided in embodiments of the present disclosure may include the starting module 52 configured to not start the first timer in response to the logical channel mapped to the SL transmission being not configured with the first timer.

It is noted that those skilled in the art may understand that the apparatus provided in the embodiments of the present disclosure may be implemented independently, or together with some apparatus in embodiments of the present disclosure or apparatus in the related art.

Regarding the apparatus in the above-mentioned embodiments, the specific manner in which each module executes operations has been described in detail in embodiments related to the method, and will not be described in detail here.

Embodiments of the present disclosure provide a communication device, and the communication device includes:
a processor;
a memory for storing instructions executable by the processor.

The processor is configured to implement the method for controlling the SL in any embodiment of the present disclosure when running the executable instructions.

The communication device here is any UE. For example, the communication device may be the first UE in any one of the above-mentioned embodiments.

The processor may include various types of storage media, which are non-transitory computer storage media, and may continue to memorize and store information thereon after the user equipment is powered off.

The processor may be connected to the memory through a bus or the like, for reading the executable program stored on the memory, for example, at least one of the methods shown in FIG. 2 to FIG. 11.

Embodiments of the present disclosure further provides a computer storage medium, where a computer executable program is stored in the computer storage medium, and when the executable program is executed by a processor, the method for controlling the SL of any embodiment of the present disclosure is implemented. For example, at least one of the methods shown in FIG. 2 to FIG. 11.

Referring to the apparatus or the storage medium in the above-mentioned embodiments of the present disclosure, the specific manner in which each module executes operations has been described in detail in embodiments related to the method, which will not be described in detail here.

FIG. 13 is a block diagram showing a user equipment 800 according to an illustrative embodiment. For example, the user equipment 800 may be a mobile phone, a computer, digital broadcast user equipment, a messaging device, a game console, a tablet device, a medical device, a fitness device, a personal digital assistant, or the like.

Referring to FIG. 13, the user equipment 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the user equipment 800, such as the operations associated with display, telephone calls, data communications, camera operations, and recording operations. The processing component 802 may include one or more processors 820 to execute instructions to complete all or part of the steps in the above-described method. Additionally, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense awake time and a pressure associated with the touch or swipe action. In some embodiments, the multimedia component 808 includes a front camera and/or a rear camera. The front camera and/or the rear camera may receive an external multimedia datum while the user equipment 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the user equipment 800. For instance, the sensor component 814 may detect an open/closed status of the user equipment 800, relative positioning of components, e.g., the display and the keypad, of the user equipment 800, a change in position of the user equipment 800 or a component of the user equipment 800, a presence or absence of user contact with the user equipment 800, an orientation or an acceleration/deceleration of the user equipment800, and a change in temperature of the user equipment 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wireless, between the user equipment 800 and other devices. The user equipment 800 can access a wireless network based on a communication standard, such as WiFi, 2G, 3G, or a combination thereof. In one illustrative embodiment, the communication component 816 receives a broadcast signal or broadcast associated information from an external broadcast management system via a broadcast channel. In one illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described method.

In illustrative embodiments, there is also provided a non-transitory computer-readable storage medium including instructions, such as included in the memory 804, executable by the processor 820 in the user equipment 800, for performing the above-described method. For example, the non-transitory computer-readable storage medium may be a ROM, a random access memory (RAM), a CD-ROM, a magnetic tape, a floppy disc, an optical data storage device, and the like.

As shown in FIG. 14, embodiments of the present disclosure shows a structure of a base station. For example, the base station 900 may be a network side device. Referring to FIG. 14, base station 900 includes a processing component 922 that further includes one or more processors, and a memory resource represented by a memory 932 for storing instructions that may be executable by the processing component 922 such as application programs. The application program stored in the memory 932 may include one or more modules each corresponding to a set of instructions. In addition, the processing component 922 is configured to execute instructions to perform the method in any one of the above-mentioned embodiments by the base station, for example, the methods shown in FIG. 4 to FIG. 10.

The base station 900 may also include a power component 926 configured to perform power management of the base station 900, a wired or wireless network interface 950 configured to connect the base station 900 to a network, and an input-output (I/O) interface 958. The base station 900 may operate based on an operating system stored in the memory 932, such as Windows Server^{™}, Mac OS X^{™}, Unix^{™}, Linux^{™}, FreeBSD^{™} or the like.

Other embodiments of the present disclosure will be apparent to those skilled in the art from consideration of the specification and practice of the disclosure disclosed here. The present disclosure is intended to cover any variations, uses, or adaptations of the disclosure following the general principles thereof and including such departures from the disclosure as come within known or customary practice in the art. It is intended that the specification and examples be considered as exemplary only, and the scope and spirit of the present disclosure are indicated by the attached claims.

It will be appreciated that the present disclosure is not limited to the exact construction that has been described above and illustrated in the accompanying drawings, and that various modifications and changes can be made without departing from the scope thereof. The scope of the present disclosure is limited only by the attached claims.

## Claims

1. A method for controlling a sidelink (SL), performed by a first user equipment (UE) and comprising:
in response to being configured with a first timer that starts timing after an SL transmission, monitoring an SL channel within a duration of the timing started by the first timer.

2. The method according to claim 1, further comprising:
starting the first timer in response to the SL transmission; or
starting the first timer after receiving a feedback indication returned after the SL transmission.

3. The method according to claim 1 or 2, further comprising:
starting the first timer after sending an SL medium access control (MAC) protocol data unit (PDU).

4. The method according to claim 1 or 2, further comprising:
starting a second timer after sending an SL MAC PDU;
starting the first timer after the second timer expires.

5. The method according to any one of claims 1 to 4, wherein monitoring the SL channel comprises:
monitoring a physical sidelink control channel (PSCCH); and/or
monitoring a physical sidelink shared channel (PSSCH).

6. The method according to any one of claims 1 to 5, further comprising:
determining the timing duration of the first timer.

7. The method according to claim 6, wherein determining the timing duration of the first timer comprises:
determining the timing duration of the first timer based on a destination address of the SL transmission.

8. The method according to claim 7, further comprising one of following:
pre-configuring the destination address of the SL transmission and the timing duration of the first timer corresponding to the destination address;
obtaining the destination address of the SL transmission and the timing duration of the first timer corresponding to the destination address which are configured by a base station;
configuring the destination address of the SL transmission and the timing duration of the first timer corresponding to the destination address via a high layer of the first UE;
receiving a destination address and the timing duration of the first timer which are sent by a second UE in response to the first UE establishing a unicast connection with the second UE, wherein the destination address comprises an address of the second UE.

9. The method according to claim 6, wherein determining the timing duration of the first timer comprises:
determining the timing duration of the first timer based on a logical channel mapped to the SL transmission.

10. The method according to claim 9, wherein determining the timing duration of the first timer based on the logical channel mapped to the SL transmission comprises:
selecting, from the first timers in a plurality of logical channels, a longest timing duration as the timing duration of the first timer started after the SL transmission in response to the logical channel mapped to the SL transmission being the plurality of logical channels configured with the first timers.

11. The method according to claim 9, further comprising one of following:
pre-configuring the logical channel mapped to the SL transmission and the timing duration of the first timer corresponding to the logical channel;
obtaining the logical channel mapped to the SL transmission and the timing duration of the first timer corresponding to the logical channel which are configured by a base station;
configuring the logical channel mapped to the SL transmission and the timing duration of the first timer corresponding to the logical channel via a high layer of the first UE;
receiving the logical channel and the timing duration of the first timer corresponding to the logical channel which are sent by a second UE in response to the first UE establishing a unicast connection with the second UE.

12. The method according to claim 11, wherein receiving the timing duration of the first timer sent by the second UE comprises:
receiving the timing duration of the first timer sent by the second UE via an SL radio resource control (RRC) message; or
receiving the timing duration of the first timer sent by the second UE via an SL MAC control element (CE).

13. The method according to claim 7, further comprising:
not starting the first timer in response to the first timer being not configured for a UE indicated by the destination address of the SL transmission.

14. An apparatus for controlling a sidelink (SL), applied to a first user equipment (UE) and comprising:
a monitoring module configured to, in response to being configured with a first timer that starts timing after an SL transmission, monitor an SL channel within a duration of the timing started by the first timer.

15. The apparatus according to claim 14, further comprising:
a starting module configured to start the first timer in response to the SL transmission; or
a starting module configured to start the first timer after receiving a feedback indication returned after the SL transmission.

16. The apparatus according to claim 14 or 15, further comprising:
a starting module configured to start the first timer after sending an SL medium access control (MAC) protocol data unit (PDU).

17. The apparatus according to claim 14 or 15, further comprising:
a starting module configured to start a second timer after sending an SL MAC PDU; and start the first timer after the second timer expires.

18. The apparatus according to any one of claims 14 to 17, wherein
the monitoring module configured to monitor a physical sidelink control channel (PSCCH), and/or monitor a physical sidelink shared channel (PSSCH).

19. The apparatus according to any one of claims 14 to 18, further comprising:
the determining module configured to determine the timing duration of the first timer.

20. The apparatus according to claim 19, wherein
the determining module configured to determine the timing duration of the first timer based on a destination address of the SL transmission.

21. The apparatus according to claim 20, wherein the determining module is configured to:
pre-configure the destination address of the SL transmission and the timing duration of the first timer corresponding to the destination address;
obtain the destination address of the SL transmission and the timing duration of the first timer corresponding to the destination address which are configured by a base station;
configure the destination address of the SL transmission and the timing duration of the first timer corresponding to the destination address;
receive a destination address and the timing duration of the first timer which are sent by a second UE in response to the first UE establishing a unicast connection with the second UE, wherein the destination address comprises an address of the second UE.

22. The apparatus according to claim 19, wherein
the determining module is configured to determine the timing duration of the first timer based on a logical channel mapped to the SL transmission.

23. The apparatus according to claim 22, wherein
the determining module is configured to select, from the first timers in a plurality of logical channels, a longest timing duration as the timing duration of the first timer started after the SL transmission in response to the logical channel mapped to the SL transmission being the plurality of logical channels configured with the first timers.

24. The apparatus according to claim 22, wherein the determining module is configured to:
pre-configure the logical channel mapped to the SL transmission and the timing duration of the first timer corresponding to the logical channel;
obtain the logical channel mapped to the SL transmission and the timing duration of the first timer corresponding to the logical channel which are configured by a base station;
configure the logical channel mapped to the SL transmission and the timing duration of the first timer corresponding to the logical channel;
receive the logical channel and the timing duration of the first timer corresponding to the logical channel which are sent by a second UE in response to the first UE establishing a unicast connection with the second UE.

25. The apparatus according to claim 24, wherein
the determining module is configured to receive the timing duration of the first timer sent by the second UE via an SL radio resource control (RRC) message; or
the determining module is configured to receive the timing duration of the first timer sent by the second UE via an SL MAC control element (CE).

26. The apparatus according to claim 20, wherein
the starting module is configured to not start the first timer in response to the first timer being not configured for a UE indicated by the destination address of the SL transmission.

27. A communication device, comprising:
a processor;
a memory for storing instructions executable by the processor;
wherein the processor is configured to implement the method for controlling the SL according to any one of claims 1 to 13 when running the executable instructions.

28. A computer storage medium having stored therein a computer executable program that, when executed by a processor, causes the method for controlling the SL according to any one of claims 1 to 13 to be implemented.
